Europäisches Patentamt

European Patent Office

Office européen des brevets

(19)

(11) Publication number: **0 227 685**
**B1**

# EUROPEAN PATENT SPECIFICATION

(12)

(45) Date of publication of patent specification: **13.12.89**

(51) Int. Cl.⁴: **G 01 F 1/28**

(21) Application number: **85905242.5**

(22) Date of filing: **15.10.85**

(86) International application number:
**PCT/SE85/00396**

(87) International publication number:
**WO 86/02443 24.04.86 Gazette 86/09**

(54) FLOW INDICATING DEVICE.

(30) Priority: **19.10.84 SE 8405226**

(43) Date of publication of application:
**08.07.87 Bulletin 87/28**

(45) Publication of the grant of the patent:
**13.12.89 Bulletin 89/50**

(84) Designated Contracting States:
**DE FR GB IT NL SE**

(56) References cited:
**DE-A-1 498 345**
**DE-A-1 648 014**
**DE-A-2 043 252**
**DE-A-2 306 134**
**DE-A-2 605 642**
**FR-A-2 119 858**
**US-A-3 881 354**
**US-A-4 254 664**

(73) Proprietor: **ALFA-LAVAL MARINE & POWER ENGINEERING AB**
**Box 500**
**S-147 00 Tumba (SE)**

(72) Inventor: **JONAK, Vladimir**
**Vinkelbacken 7**
**S-147 00 Tumba (SE)**

(74) Representative: **Lerwill, John et al**
**A.A. Thornton & Co. Northumberland House**
**303-306 High Holborn**
**London, WC1V 7LE (GB)**

Courier Press, Leamington Spa, England.

## Description

The present invention relates to a device for detecting changes in a fluid flow, and in particular such a device which includes a housing with an inlet and an outlet for the fluid, a passage in the housing through which the fluid passes a valve member movable in the housing to increase and decrease progressively the through-flow area of the passage, a support member connected with the housing, a spring urging the valve member relative to the support member to decrease the through-flow area of the passage, the valve member being movable by fluid flowing through the passage against the action of said spring, and means responsive to changes in the position of the valve member.

In a device of this form disclosed in US patent specification No. 3,881,354, the valve member compresses a coil spring to a certain degree depending on the rate of the flow though said passage. Changes in the flow rate through the passage will thus result in changes of the compression of the screw spring. With this device it is not possible to achieve the same high accuracy in sensing a small change in the flow rate at large flows as may be achieved at a small flows through the passage. The reason for this is the varying resistance to compression exerted by the coil spring at various stages of compression. It would thus be necessary to use different springs or different valve sizes for various magnitudes of the fluid flow, as described in DE—A—1498345, DE—A—2043252 and DE—A—2306134.

The object of the present invention is to provide a device which avoids the drawback of the prior art devices and in accordance with the invention there is provided a device for detecting changes of a fluid flow, comprising a housing with an inlet and an outlet for the fluid, a passage formed in the housing for said fluid to pass through on its way from said inlet to said outlet, a valve member movable in opposite directions in the housing to increase and decrease progressively the through-flow area of the passage, a support member connected with the housing, a spring acting between the valve member and the support member to urge the valve member in the direction to decrease the through-flow area of the passage, the valve member being movable by the fluid flowing through the passage against the action of said spring, and means responsive to changes in position of the valve member, characterised in that the support member is displaceable relative to the housing in the direction of movement of the valve member thereby to adjust the valve member to suit different magnitudes of flow through the device.

The device of the invention can be easily adjustable such that the same high accuracy can be obtained in detecting a moderate change in the flow independent of the magnitude of the flow.

In a preferred embodiment of the invention the valve member is guided during movement thereof by the support member along said path.

Preferably a further spring acts between the housing and the support member and urges the latter in the same direction as that in which is biased by the spring acting between the valve member and the support member, said further spring being stronger than the other spring.

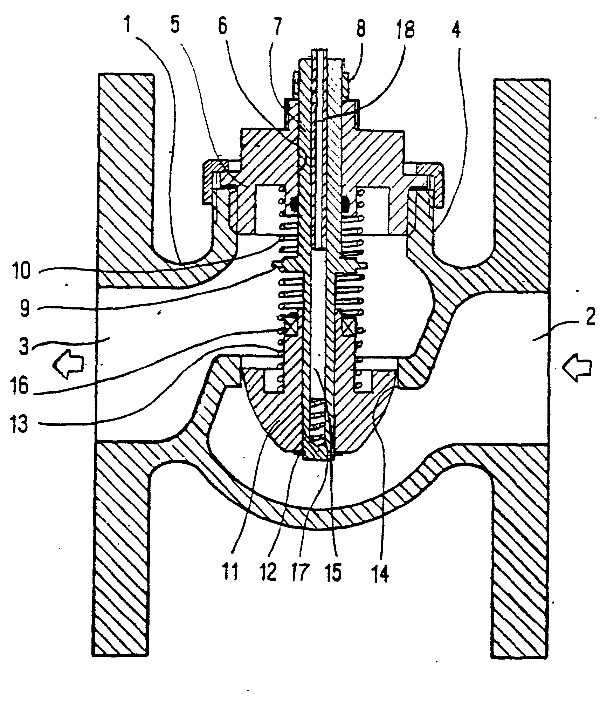

An embodiment of the invention is described in more detail below with reference to the accompanying drawing, which shows in cross-section a device according to the invention.

The device illustrated in the drawing has a housing 1 with an inlet 2 and an outlet 3 for a stream of liquid. The housing is provided with a socket 4, in which a closure member 5 is fitted. In the closure member 5 there is a bore 6, in which a support member in the form of a spindle 7 is axially slidable. The spindle is threaded and provided with a nut 8 at its end situated outside the housing. A disc shaped projection 9 is provided on a spindle portion situated within the housing. Between the projection 9 and the closure member 5 there acts a coil spring 10. By means of the nut 8 and this spring the position of the spindle can be adjusted axially relative to the housing 1. A valve member 11 provided with a central bore is slidable on the spindle portion located inwardly of the projection 9. Movement of said valve member in a direction away from the projection 9 is limited by an element providing a shoulder 12 at the end of the spindle 7. The valve member 11 is pressed against the shoulder 12 by a coil spring 13, which is supported by the projection 9. Coaxially with the valve member 11 there is arranged a passage 14 in the housing for the flow of a fluid between the inlet 2 and the outlet 3. The valve member 11 preferably has a parabolically curved surface for co-operation with the means forming said passage 14 for varying the through-flow area of the latter.

The spindle 7 is provided with a bore axially extending from the spindle end situated outside the housing 1 to an end wall near the other end of the spindle 7. In the spindle bore there is provided an electric spring switch 15, i.e. a so-called reed switch, which is actuable by a magnet 16 fixed to the valve member 11. The reed switch 15 is positioned within the spindle bore by means of a coil spring 17 and a tube 18 threaded into the spindle bore. The spring 17 is situated between the bottom wall of the spindle bore and the reed switch 15 and presses the reed switch against the inner end of the tube 18. The reed switch 15 is to be actuated by the magnet 16 when the valve member has moved a certain distance from its rest position against the shoulder 12, i.e. at a position somewhere between the shoulder 12 and the projection 9. The switch actuating position of the valve member is adjusted by turning the threaded tube 18 such that the reed switch 15 is moved axially in the spindle bore. Preferably, the position is set such that the magnet 16 will actuate the reed switch 15 when the valve member 11 is moved only a small distance from the shoulder 12. This setting operation must be performed before the sub-assembly comprising the closure member 5, the support member 7 and the valve member 11, is fitted into the socket 4. The reed switch 15 and the magnet 16 form a sensing means responsive to the position of the valve member 11 in the housing 1.

In use, i.e. while liquid is flowing through the housing 1, the device is further adjusted by moving the spindle 7 by means of the nut 8 into a position relative to the housing 1 such that the liquid flowing through the passage 14 forces the valve member 11 to take up a position relative to the spindle, at which the magnet 16 actuates the reed switch 15. Upon a certain decrease in the flow through the passage 14, the spring 13 will displace the valve member 11 relative to the spindle 7 such that the magnet 16 will no longer actuate the reed switch 15 to indicate the flow. A certain increase in the flow through the passage 14 will also cause the magnet to move out of the switch actuating position as a result of a movement of the valve member 11 in the opposite direction relative to the spindle 7.

If the liquid flow through the passage 14 ceases, the valve member 11 will of course become seated on the shoulder 12, in which position the through-flow area of the passage 14 will depend on the magnitude of the liquid flow for which the device was last adjusted.

The spring 13 is so much weaker than the spring 10 that it will be completely compressed by the force of the flowing liquid acting on the valve member 11, before compression of the spring 10 begins. The inclusion of the spring 10 is a precaution in case a device has not been readjusted to suit a change to a substantially larger liquid flow. In such a case, the spring 10 will be compressed and the flow will not be obstructed by the valve member, which would otherwise cause an undesired high pressure which could be damaging for equipment connected to the flow indicating device.

**Claims**

1. A device for detecting changes of a fluid flow, comprising a housing (1) with an inlet (2) and an outlet (3) for the fluid, a passage (14) formed in the housing for said fluid to pass through on its way from said inlet (2) to said outlet (3), a valve member (11) is movable in opposite directions in the housing (1) to increase and decrease progressively the through-flow area of the passage (14), a support member (7) connected with the housing (1), a spring (13) acting between the valve member (11) and the support member to urge (7) the valve member (11) in the direction to decrease the through-flow area of the passage (14), the valve member (11) being movable by the fluid flowing through the passage (14) against the action of said spring (13), and means (15, 16) responsive to the position of the valve member (11) characterised in that the support member (7) is displaceable relative to the housing (1) in the direction of movement of the valve member (11) thereby to adjust the valve member (11) to suit different magnitudes of flow through the device.

2. A device according to claim 1, wherein the valve member (11) is guided by the support member (7).

3. A device according to claim 1 or 2, wherein a further spring (10) acts between the support member (7) and the housing (1) and urges the support member in the same direction as that in which the valve member (11) is urged by the first spring (13), said further spring (10) being stronger than said first spring (13).

4. A device according to claim 1, 2 or 3, wherein the support member comprises a spindle and the valve member (11) is slidable on the spindle.

**Patentansprüche**

1. Vorrichtung zum Anzeigen von Änderungen einer Fluidströmung, mit einem Gehäuse (1) mit einem Einlaß (2) und einem Auslaß (3) für das Fluid, mit einem in dem Gehäuse ausgebildeten Kanal (14) für das Fluid zum Durchströmen auf seinem Weg von dem Einlaß (2) zu dem Auslaß (3), mit einem Ventilglied (11), welches in entgegengesetzte Richtungen in dem Gehäuse (1) verschieblich ist zum progressiven Vergrößern und Verkleinern der Durchströmfläche des Kanales (14), mit einem Stützteil (7), welches mit dem Gehäuse (1) verbunden ist, mit einer Feder (13), die zwischen dem Ventilglied (11) und dem Stützteil (7) wirkt, um das Ventilglied (11) in Richtung einer Verringerung der Durchströmfläche des Kanals (14) zu beaufschlagen, wobei das Ventilglied (11) durch das durch den Kanal (14) strömende Fluid entgegen der Wirkung der Feder (13) verschieblich ist, und mit Mitteln (15, 16), die auf die Position des Ventilgliedes (11) ansprechen, dadurch gekennzeichnet, daß das Stützteil (7) verschieblich ist relativ zu dem Gehäuse (1) in Richtung der Bewegung des Ventilgliedes (11), um dadurch das Ventilglied (11) zur Anpassung an verschiedene Strömungstärken durch die Vorrichtung einzustellen.

2. Vorrichtung nach Anspruch 1, bei der das Ventilglied (11) durch das Stützteil (7) geführt wird.

3. Vorrichtung nach Anspruch 1 oder 2, bei der eine weitere Feder (10) zwischen dem Stützteil (7) und dem Gehäuse (1) wirkt und das Stützteil in der gleichen Richtung beaufschlagt wie diejenige, in der das Ventilglied (11) durch die erste Feder (13) beaufschlagt wird, wobei die weitere Feder (10) stärker ist als die erste Feder (13).

4. Vorrichtung nach Anspruch 1, 2 oder 3, bei der das Stützteil eine Spindel umfaßt und das Ventilglied (11) auf der Spindel versdchieblich ist.

**Revendications**

1. Dispositif pour détecter les modifications d'un écoulement de fluide comprenant un logement (1) avec une entrée (2) et une sortie (3) de fluide, un passage (14) formé dans le logement pour ledit fluide de façon qu'il le traverse sur son parcours entre ladite entrée (2) et ladite sortie (3), un organe de soupape (11) mobile dans les directions opposées dans le logement (1) pour augmenter ou diminuer progressivement l'aire d'écoulement du passage (14), un organe de support (7) relié au logement (1), un ressort (13) agissant entre l'organe de soupape (11) et l'organe de support (7) pour solliciter l'organe de soupape (11) dans la direction diminuant l'aire d'écoulement du passage (14), l'organe de soupape (11) pouvant être déplacé par le fluide s'écoulant par le passage (14) à l'encontre de l'action dudit ressort (13), et un moyen (15, 16) sensible à la position de l'organe de soupage (11) caractérisé en ce que l'organe de support (7) peut être déplacé par rapport au logement (1) dans la direction du mouvement de l'organe de soupape (11) de façon à ajuster l'organe de soupape (11) et l'adapter à différentes amplitudes de l'écoulement passant par le dispositif.

2. Dispositif selon la revendication 1, dans lequel l'organe de soupape (11) est guidé par l'organe de support (7).

3. Dispositif selon la revendication 1 ou 2, dans lequel un autre ressort (10) agit entre l'organe de support (7) et le logement (1) et sollicite l'organe de support dans la même direction que celle dans laquelle l'organe de soupape (11) est sollicité par le premier ressort (13), ledit autre ressort (10) étant plus fort que ledit premier ressort (13).

4. Dispositif selon l'une quelconque des revendications 1 à 3, dans lequel l'organe de support comprend une broche et l'organe de soupape (11) peut coulisser sur la broche.